(19) Europäisches Patentamt
European Patent Office
Office européen des brevets

(11) Numéro de publication: **0 183 757 B1**

(12) **FASCICULE DE BREVET EUROPEEN**

(45) Date de publication de fascicule du brevet: **30.10.91**

(51) Int. Cl.$^5$: **B01D 69/08**, D01D 5/24, B01D 67/00, //A23C9/142

(21) Numéro de dépôt: **85902577.7**

(22) Date de dépôt: **12.06.85**

(86) Numéro de dépôt internationale : **PCT/FR85/00147**

(87) Numéro de publication internationale : **WO 86/00028 (03.01.86 86/01)**

Le dossier contient des informations techniques présentées postérieurement au dépôt de la demande et ne figurant pas dans le présent fascicule.

# (54) PROCEDE DE FABRICATION DE FIBRES CREUSES ET LEURS APPLICATIONS NOTAMMENT DANS LE DOMAINE DES SEPARATIONS PAR MEMBRANES.

(30) Priorité: **13.06.84 FR 8409224**
**13.06.84 FR 8409225**

(43) Date de publication de la demande: **11.06.86 Bulletin 86/24**

(45) Mention de la délivrance du brevet: **30.10.91 Bulletin 91/44**

(84) Etats contractants désignés: **AT BE CH DE FR GB IT LI LU NL SE**

(56) Documents cités:

| | |
|---|---|
| EP-A- 0 092 587 | FR-A- 1 307 979 |
| FR-A- 2 182 202 | FR-A- 2 265 437 |
| FR-A- 2 396 104 | FR-A- 2 435 276 |
| FR-A- 7 315 427 | US-A- 3 871 950 |

(73) Titulaire: **INSTITUT NATIONAL DE RECHERCHE CHIMIQUE APPLIQUEE**
**18 Bis, Boulevard de la Bastille**
**F-75012 Paris(FR)**

Titulaire: **CENTRE NATIONAL DE LA RECHERCHE SCIENTIFIQUE (CNRS)**
**15, Quai Anatole France**
**F-75007 Paris(FR)**

(72) Inventeur: **APTEL, Philippe**
**22, rue Johan Strauss**
**F-31400 Toulouse(FR)**
Inventeur: **ESPENAN, Jean-Michel Résidence Le Bigorre**
**Bât. B2 31-33, rue de Touraine**
**F-31100 Toulouse(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services

Patents Abstracts of Japan, vol. 3, no. 37, 29 March 1979, page 17C41 & JP,A, 54/10282

Journal of Applied Polymer Science, vol. 21, 1977, New York (US) I. Cabasso et al.: "Polysulfone Hollow Fibers: II Morphology, pages 165 to 180, see Abstract; page 166, lines 8 to 10, 23 to 36; page 169, line 5 to page 170, line 11; page 170, lines 31 to 47; page 175, lines 31 to 41; page 178, lines 2 to 17; figures 3,4

(74) Mandataire: Rinuy, Santarelli
14, avenue de la Grande Armée
F-75017 Paris(FR)

## Description

La présente invention concerne un procédé de préparation de fibres creuses à base de substances polymères fibrogènes.

On connaît déjà un certain nombre de fibres creuses à base de substances polymères fibrogènes présentant des structures asymétriques. De telles structures asymétriques appartiennent, en général, à l'une des classes suivantes :

- la classe des structures présentant une couche relativement dense dite ci-après "peau" à la périphérie du canal interne de la fibre avec, comme caractéristique notable, une porosité croissante (de l'intérieur vers l'extérieur de la fibre) et la présence de macrovides entre cette peau interne et la périphérie externe de la fibre. Une telle fibre est illustrée à la figure 1 (vue en coupe suivant un plan perpendiculaire à l'axe longitudinal de la fibre) des dessins annexés. En se référant à cette figure, on a schématisé en A une portion de la peau interne, en B les macrovides, la référence C désignant la périphérie externe de la fibre et la flèche F symbolisant la porosité croissante de l'intérieur vers l'extérieur de la fibre. Des fibres présentant une telle structure sont par exemple révélées dans les brevets US N° 3.526.588, 3.615.024, 3.423.491 ;
- la classe des structures présentant, comme dans le cas précédent, une peau interne, une porosité croissante de l'intérieur vers l'extérieur de la fibre mais l'absence de macrovides. C'est ainsi que la figure 2 des dessins annexés schématise une fibre de cette classe, A désignant la peau interne, D la section entre cette peau interne et la périphérie C, dans laquelle on remarque l'absence de macrovides et la flèche F symbolisant la porosité croissante de l'intérieur vers l'extérieur de la fibre. De telles fibres sont par exemple révélées dans le brevet US N° 4.051.300 ;
- la classe des structures présentant une peau interne et une peau externe, ces deux peaux se trouvant de part et d'autre d'une section des fibres présentant une majorité de macrovides. Une telle fibre est illustrée à la figure 3 des dessins annexés. On voit sur cette figure en A la peau interne, en E la peau externe et entre les deux, les macrovides B. La porosité dans ce type de fibres est également croissante mais dans le sens des deux flèches $F_1$ et $F_2$. Ce type de fibres est par exemple révélé dans le brevet français N° 77.34031 ;
- la classe des structures ne présentant pas, à l'inverse des classes précédemment décrites, de peau interne mais ne présentant par contre qu'une peau externe. De telles fibres ne comportent pas de macrovides entre l'extérieur et l'intérieur de la fibre. Leur porosité est croissante de l'extérieur vers l'intérieur. La figure 4 illustre une telle fibre. On y a schématisé en E la peau externe et en D la couche poreuse, la porosité étant dans ce cas croissante dans le sens de la flèche $F_3$. De telles fibres ont par exemple été révélées dans le brevet français N° 80.06858 ;
- la classe des structures présentant, comme dans le cas des fibres illustrées à la figure 3, une peau interne et une peau externe mais avec la présence de macrovides entre ces deux peaux. Une telle fibre est illustrée à la figure 5. A et E désignent respectivement les peaux interne et externe avec une certaine proportion de macrovides et de microvides (B et D). Dans ce cas, la porosité est croissante dans le sens des deux flèches $F_4$ et $F_5$. De telles fibres sont révélées par exemple dans le brevet français N° 79.11031 ;
- la classe des structures ne présentant aucune peau comme illustré à la figure 6, figure sur laquelle la structure poreuse entre la périphérie interne G et la périphérie externe C comporte à la lois des macro- et des microvides respectivement D et B. Ce type de fibres est révélé par exemple dans le brevet français N° 73.15427.

La demande de brevet japonais N° 54.10282 décrit des fibres creuses présentant une peau dont les pores ont un diamètre inférieur à 0,05 µm et dont la couche sous-jacente comprend des macrocavités de formes et dimensions variables, de répartition irrégulière et en quantité limitée. Ces fibres ont une perméabilité à l'eau réduite, même par utilisation de polymères hydrophiles et malgré la présence d'un important canal central.

La demande de brevet européen N° 0092587 décrit des membranes d'ultrafiltration à base de fibres creuses réalisées en polyméthylméthacrylate et préparées par extrusion d'une solution qui est le siège d'une séparation de phase, avant sa pénétration dans le bain de coagulation et par injection dans le canal d'un solvant pur ou en mélange. Les fibres permettent le passage de macromolécules telles que l'albumine et des protéines sériques.

Il serait souhaitable de disposer de fibres creuses alliant une bonne séparation à une bonne perméabilité à l'eau.

C'est pourquoi la présente invention a pour objet un procédé selon revendication 1.

La présente invention vise des fibres creuses de structure asymétrique se différenciant des diverses

structures rappelées ci-dessus en ce sens qu'elles présentent une couche relativement dense ("peau") de très faible épaisseur (< 1µm, et de préférence inférieure à 0,1 µm) à leur périphérie externe, laquelle est liée à une structure dont la porosité augmente lorsqu'on se dirige vers la face interne.

De façon particulière,

- la structure sous-jacente à ladite peau est une structure dite "ouverte", composée avantageusement d'une couche microporeuse directement au contact de ladite peau dense et est caractérisée par la présence de pores de dimensions supérieures à 0,1 µm et inférieures à 2 µm et d'une couche macroporeuse présentant des macrovides essentiellement cylindriques orientés radialement et régulièrement espacés avec des parois de porosité homogène dans le sens radial s'ouvrant du côté de la face interne de la fibre et ne s'ouvrant pas du côté de la face externe, ces macrovides ayant une dimension principale supérieure à 2 µm, la proportion de ces macrovides représentant au moins 10 % en volume de la paroi.

Suivant d'autres caractéristiques :

- ladite peau externe présente une très faible épaisseur inférieure à 0,1 µm et est perméable à l'eau avec une absence substantielle de pores de diamètre supérieur à 0,1 µm ;
- la proportion des macrovides représente au moins 20 % en volume de la paroi ;
- les macrovides sensiblement cylindriques ont une longueur pouvant atteindre plus de 9/10èmes de l'épaisseur de la paroi totale ;
- le diamètre de la section circulaire des macrovides est généralement supérieur à 5 µm ;
- les fibres creuses selon l'invention sont à base de tous polymères fibrogènes pouvant être dissous dans un solvant et coagulés dans un non-solvant.

Parmi les exemples de polymères susceptibles de former les fibres selon l'invention, on peut citer les polyfluorures de vinylidène, les polysulfones, les polyacrylonitriles, la cellulose et les esters cellulosiques, les poly(chlorures de vinyle), les poly(acétates de vinyle), les polyamides, les polyimides, les polycarbonates, les poly(oxydes de phénylène), les polystyrènes et plus généralement, les polyéthers, les polyesters, les poly(oxydes d'aryline), les polysullures, les polymères polyvinyliques, les polymères polyallyliques, les polyazoles et les polyimidazoles, les polyphosphazines, les polyhydrazides, ou bien ce polymère fibrogène peut être choisi parmi les copolymères ou les mélanges de polymères constitués à partir d'au moins un des polymères ci-dessus.

On obtient les fibres en question en mettant en oeuvre le procédé décrit précédemment.

L'additif particulier est choisi parmi les molécules permettant l'obtention d'une solution macroscopiquement homogène avec le couple solvant-polymère, tout en étant susceptible d'être extrait de la fibre lors de la coagulation de cette dernière, ou par tout post-traitement approprié. Comme exemple de molécules d'additif répondant à la définition ci-dessus, on peut citer soit des macromolécules de masse moléculaire supérieure à 500, du type polyvinylpyrrolidones, polyvinylpyridines, alcools polyvinyliques, polyéthylèneglycols, polyacryamides, acides polyacryliques, soit des agents tensio-actifs ioniques ou non, comprenant dans leur molécule, à la fois au moins un motif hydrophobe et au moins un motif hydrophile (ionique ou non), le motif hydrophobe pouvant être du type polyoxyéthylène.

Le fluide particulier d'injection interne peut être un liquide ou un gaz et il contient une quantité suffisante d'au moins un solvant du polymère fibrogène pour éviter que ledit fluide ne coagule la solution contenant le polymère fibrogène.

La portée et l'intérêt de l'invention ressortiront plus clairement de la description qui va suivre, faite en regard des dessins annexés sur lesquels :

- les figures 1 à 6 qui ont déjà été décrites illustrent différents types de fibres connues ;
- la figure 7 est une figure schématique établie sur les mêmes bases que ces figures 1 à 6 illustrant la section d'une fibre obtenue selon l'invention ;
- les figures 8, 9, 10 et 11 sont différentes vues photographiques prises au microscope électronique d'une fibre obtenue selon l'invention, et,
- la figure 12 est un schéma explicatif du procédé selon invention.
- la figure 13 illustre un mode de réalisation possible d'une cartouche mettant en oeuvre des faisceaux de fibres à circulation externe longitudinale (CEL) ;
- la figure 14 illustre un autre mode de réalisation possible d'une cartouche mettant en oeuvre des faisceaux de fibres à circulation externe radiale (CER) ;
- la figure 15 illustre un troisième mode de réalisation possible mettant en oeuvre des faisceaux de fibres à circulation interne (CI).

En se référant à ces figures, on voit, en particulier sur les agrandissements photographiqees 8 et 9 (coupes axiales), une peau externe désignée par H sur le schéma de la figure 7 ; une structure poreuse comportant des macrovides I en forme de doigts allongés ouverts vers l'intérieur, comme on le voit plus

précisément sur l'agrandissement photographique 10. Cet agrandissement photographique correspond, en effet, à une prise de vue depuis l'intérieur de la fibre. Les cratères sensiblement circulaires que l'on y distingue correspondent à l'éxtrémité de ces doigts. On distingue aussi sur cet agrandissement les microvides J. Quant à la peau externe H, celle-ci apparait sur l'agrandissement photographique 11 qui montre la densité de cette peau sans vides nettement visibles. Compte tenu de cette structure, il est manifeste que la porosité de la fibre est croissante de l'extérieur vers l'intérieur.

Pour plus de précisions, il est à noter que dans l'agrandissenent photographique 8, 1 cm = 50 µm ; dans l'agrandissement 9, 1,5 cm = 25 µm ; dans l'agrandissement 10, 1 cm = 5 µm et dans l'agrandissement 11, 1 cm = 1 µm.

Pour obtenir les fibres creuses ainsi illustrées, on fait appel à la technique de filage dite "par voie sèchehumide". Cette technique est représentée schématiquement sur la figure 12.

Un réservoir 1 de solution de polymère avantageusement muni d'un filtre 3a admet cette solution dans la filière 6, représentée à plus grande échelle, sous pression, grâce à l'introduction d'un gaz inerte comme par exemple de l'azote, fourni par la bouteille de gaz 2, le contrôle de cette pression se faisant par le manomètre 3. La solution de polymère provenant du réservoir 1 renferme un solvant de ce polymère et au moins un additif tel que défini précédemment, c'est-à-dire soit une macromolécule de masse molaire supérieure à 500, soit un agent tensio-actif ionique ou non (hydrophile-hydrophobe).

Concomitamment, on admet dans l'orifice annulaire de cette filière 6 le fluide contenant le solvant tel que décrit précédemment. Bien entendu, le fluide provient d'un réservoir 4 et son admission dans la filière se fait par l'intermédiaire d'un débitmètre 5 contrôlant le débit et d'une vanne 8 dont la commande est fonction du débit désiré. Un moteur 9 de bobinage de la fibre 10 en aval du bac de coagulation 7 contenant la solution coagulante permet à la fois de régler la tension d'étirage de la fibre et son stockage.

La solution de coagulation peut être choisie parmi tous non-solvants appropriés. Ce sera de préférence de l'eau.

En procédant de la sorte, l'asymétrie de la fibre creuse selon l'invention est obtenue grâce à une coagulation différente des deux faces de l'extrudat. La face externe de la fibre se coagule rapidement au contact du non-solvant du polymère, alors que se produit une très lente coagulation de la face interne puisque celle-ci est en contact avec le solvant contenu dans le fluide injecté à la partie centrale de l'orifice annulaire de la fitière 6.

De façon avantageuse, ce type de filage est réalisé en faisant appel à des solutions extrudables capables de former un solide précurseur avant des viscosités d'environ 5 pascal-seconde à 1000 pascal-seconde ou plus, à la température de filage.

De plus, le non-solvant et le solvant doivent être miscibles et de préférence en toutes proportions et l'additif peut avantageusement être éliminé de la fibre par simple lavage à l'aide d'un solvant de celui-ci qui soit, bien entendu, non solvant du polymère.

Il va de soi que plus le non-solvant du polymère sera fort, plus l'asymétrie sera importante et plus, le temps de coagulation total avant lavage et stockage sera faible.

Dans les examples qui suivent, la caractérisation de la porosité est effectuée par observation de clichés obtenus par microscopie électronique à balayage. Si cette technique permet de s'assurer que la peau ne comporte pas de pores d'une dimension supérieure à 1000 Å (0,1 µm) environ, elle ne permet pas de détecter facilement et avec certitude des pores de plus faible dimension. Pour vérifier la présence de pores plus fins, la perméabilité à l'eau a été utilisée. Un procédé pour mesurer la perméabilité à l'eau consiste à former une boucle de quelques fibres creuses. L'extrémité ouverte des fibres creuses est encastrée dans une feuille de tubes. Cette boucle est ensuite placée dans une enveloppe cylindrique. De l'eau sous pression est introduite dans l'enveloppe et l'on recueille l'eau qui a traversé la paroi des fibres par l'extrémité ouverte de la boucle.

Le rapport entre la quantité d'eau recueillie (exprimée en $m^3$ par seconde et par $m^2$ de surface) et la différence de pression appliquée de part et d'autre de la paroi de la fibre (exprimée en pascals) est utilisé pour chiffrer la perméabilité. Ce rapport symbolisé par Lp est appelé coefficient de perméabilité hydraulique. Il a comme unité des $m^3/m^2.s$ Pa ou des m/s.Pa. Toutes les perméabilités sont mesurées à la température de 75° C.

Exemple 1

A partir d'une solution composée de polysulfone ("Udel 3500") à 29 %, de "Triton X 100" à 22 % et de N-N-diméthylformamide à 49 % (% massique), on a extrudé avec la méthode décrite, et avèc du N-N-diméthylformamide comme fluide d'injection interne et de l'eau comme coagulant, une fibre creuse.

Son diamètre extérieur est de 580 µm et son diamètre intérieur de 440 µm.

La fibre creuse présente la structure selon l'invention :

- sur sa face externe, on trouve une "peau" ne comportant pas de pores de diamètre supérieur à 1000 Å ;
- la structure ouverte sous-jacente à la peau externe est constitutée par une couche microporeuse d'épaisseur 30 µm présentant des pores dont la plus grande taille est d'environ 1,5 µm, et d'une couche macroporeuse présentant des macrovides de forme cylindrique orientés radialement débouchant sur la face interne ayant 40 µm environ de longueur et un diamètre sur la face interne d'environ 14 µm. Ces macrovides en occupent environ 20 % du volume de la paroi.

La présence de pores de diamètre inférieur à 1000 Å dans la peau est mise en évidence par la perméabilité à l'eau :

$p_{25°C}$ = 6,9.$10^{-10}$ $m^3/m^2$.s.Pa

Exemple 2

A partir d'une solution composée de polyfluorure de vinylidène ("FUCK 1000") à 28%, "Triton X100" à 18 %et de N-N-diméthylformamide à 54 % (% massique), avec comme fluide d'injection interne du N-N-diméthyl acétamide, et de l'eau comme coagulant, on a filé une fibre creuse. Son diamètre extérieur est de 580 µm et son diamètre intérieur de 440 µm.

La fibre creuse présente la structure selon l'invention :

- sur sa face externe on trouve une peau ne comportant pas de pores de diamètre supérieur à 1000 Å ;
- la structure ouverte sous-jacente à la peau externe est constituée d'une couche microporeuse d'épaisseur 4 µm présentant des pores dont la plus grande taille est d'environ 0,5 µm, et d'une couche macroporeuse présentant des macrovides de forme cylindrique orientés radialement et débouchant sur la face interne ayant environ 121 µm de longueur et 15 µm de diamètre sur la face interne. Les macrovides occupent environ 40 % du volume de la paroi.

La présence de pores de diamètre inférieur à 1000 Å dans la peau externe est mise en évidence par la perméabilité à l'eau :

$Lp_{25°C}$ = 2,6.$10^{-10}$ $m^3/m^2$.s.Pa

Exemple 3

A partir d'une solution composée de polysulfone ("Udel 3500") à 18 % de polyvinylpyrrolidone "K15" à 18 % et de N-N-diméthylformamide à 64 % (% massique), avec comme fluide d'injection interne du N-N-diméthylformamide et de l'eau comme coagulant, on a filé une fibre creuse. Son diamètre extérieur est de 430 µm et son diamètre intérieur de 150 µm.

La fibre creuse présente la structure selon l'invention :

- sur sa face externe, on trouve une peau ne comportant pas de pores de diamètre supérieur à 1000 Å ;
- la structure ouverte sous-jacente à la peau externe est constituée d'une couche microporeuse d'épaisseur 20 µm présentant des pores dont la plus grande taille est d'environ 1 µm et d'une couche macroporeuse présentant des macrovides de forme cylindrique orientés radialement et débouchant sur la face interne ayant environ 120 µm de longueur et 10 µm de diamètre, sur la face interne. Les macrovides occupent environ 60 % du volume de la paroi.

La présence de pores de diamètre inférieur à 1000 Å dans la peau externe est mise en évidence par la perméabilité à l'eau :

$Lp_{25°C}$ = 0,4.$10^{-10}$ $m^3/m^2$.s.Pa

Exemple 4

Filage sans apport d'additif

On fait une solution à 29 % de polysulfone ("Udel 3500") et de 71 % de N-N-diméthylformamide.

On file cette solution par le procédé décrit en utilisant du N-N-diméthylformamide comme fluide d'injection interne. On constate à l'examen de la fibre obtenue qu'elle comporte une peau externe et une structure sous-jacente ouverte avec la présence de macrovides dont certains s'ouvrent sur la face interne. Cependant une des caractéristiques de cette fibre filée en l'absence d'additif est que sa perméabilité à

l'eau est extrêmement faible, ce qui montre ainsi que la peau présente très peu de pores :

$Lp_{25°C} < 10^{-12}$ m/s.Pa

Exemple 5

Filage en présence d'eau dans le fluide d'injection interne

On fait une solution identique à celle de l'exemple 1. On file cette solution par le Procédé décrit en utilisant une solution du type suivant comme fluide d'injection interne :

- N-N-diméthylformamide 90 %
- Eau 10 %

} % massique

On obtient une fibre creuse. Son diamètre extérieur est de 350 µm et son diamètre intérieur de 110 µm.

La fibre creuse présente la structure selon l'invention :

- sur sa face externe, on trouve une peau ne comportant pas de pores de diamètre supérieur à 1000 Å ;
- la structure ouverte sous-jacente à la peau externe est constituée d'une couche microporeuse d'épaisseur 7 µm présentant des pores dont la plus grande taille est environ 1.5 µm et d'une couche macroporeuse présentant des macrovides de forme cylindrique orientés radialement ayant environ 107 µm de longeur. Les macrovides occupent environ 40 % du volume de la paroi..

Une des caractéristiques de ces fibres filées avec la présence de 10 % d'eau dans le fluide d'injection interne est que les macrovides qui ont environ 16 µm de diamètre dans la paroi se rétrécissent pour n'avoir plus que 2 µm de diamètre quand ils débouchent sur la face interne.

La présence de pores de diamètre inférieur à 1000 Å dans la peau externe est mise en évidence par la perméabilité à l'eau :

$LP_{25°C} = 0,46.10^{-10}$ $m^3/m^2$.s.Pa

Les fibres creuses obtenues selon l'invention trouvent des applications intéressantes dans divers domaines et en particulier, elles peuvent être directement utilisées en ultrafiltration ou en microfiltration, dans le domaine de la dialyse, dans le domaine de l'osmose inverse, dans celui de la perméation gazeuse ou de pervaporation, ou même comme support de membrane liquide.

La présence d'une peau externe dans la structure des fibres obtenues selon l'invention permet leur utilisation en ultrafiltration ou microfiltration dans des systèmes où le fluide à traiter circulera avantageusement à l'extérieur des fibres, rendant ainsi ces systèmes compacta et performants, comme le montrent les exemples qui en sont donnés ci-après :

En Se référant à la figure 13, la cartouche désignée par la référence C se compose d'un cylindre 11 contenant un faisceau 12 d'un grand nombre de fibres creuses disposées parallèlement les unes aux autres. Las extrémités de ces fibres sont coulées dans un bloc 13-13a de résine appropriée et collées dans ce bloc, assurant ainsi une étanchéité entre le liquide à "ultrafiltrer" admis par l'orifice A, sous pression, pour amener ce liquide à circuler essentiellement parallèlement à l'axe des fibres et à l'extérieur de celles-ci (dans le sens A-D). La perméat, recueilli dans le canal interne de chacune des fibres, s'écoule hors de la cartouche par l'une ou l'autre ou par les deux extrémités des fibres (flèches B-B').

La cartouche illustrée à la figure 14 est constituée également d'un cylindre 11, d'un faisceau de fibres creuses 12 dont les extrémités sont, comme précédemment, noyées et collées dans les blocs de résines 13-13a. Le liquide à traiter (A) est amené au centre du faisceau de fibres au moyen d'un tube 14 percé d'orifices multiples 15, ce tube 14 étant disposé parallèlement à l'axe des fibres. Il est obturé à l'extrémité opposée à l'extrémité d'entrée du liquide A, par un bouchon amovible 16. La circulation du liquide A s'effectue sous pression et, étant donné la présence du bouchon 16, cette circulation s'effectue essentiellement perpendiculairement à l'axe des fibres, grâce à la présence des orifices 15. Le perméat est recueilli dans le canal interne des fibres et il s'écoule hors de la cartouche par l'une ou l'autre ou par les deux extrémités des fibres (flècnes B-B'). La sortie de la solution s'effectue en A', en suivant les flèches f, une grille en tout matériau approprié (17) ménageant l'espace de circulation désiré entre les parois du cylindre

11 et le faisceau de fibres 12.

Par contre, en se référant à la figure 15 qui illustre une cartouche à circulation interne où, comme dans le cas précédent, le faisceau de fibres 12 est disposé à l'intérieur du cylindre 11 avec l'extrémité des fibres noyée dans les blocs 13-13a, le liquide A à traiter circule sous pression, dans le sens A-D, à l'intérieur des canaux internes des fibres comme illustré par les flèches F. Le perméat est recueilli à l'extérieur du faisceau de fibres et circule hors de la cartouche par un ou plusieurs orifices tels que en B, réalisés à la périphérie du cylindre 11.

Les exemples qui suivent ont pour but de comparer les performances que l'on obtient avec une cartouche contenant des fibres creuses à peau interne (où la circulation du milieu à traiter se fait à l'intérieur des fibres creuses avec une cartouche réalisée telle qu'illustrée à la figure 15) de même encombrement que les cartouches réalisées selon les figures 13 et 14.

Les fibres qui équipent les cartouches (CEL et CER) telles qu'illustrées aux figures 13 et 14 ont été obtenues par le procédé décrit ci-dessus.

Il résulte de la filature d'une solution composée de 29 % de polysulfone ("Udel 500"), 22 % de "Triton X 100" et de 49 % de N,N-diméthylformamide, (ces pourcentages étant en % massique), le fluide d'injection interne était du N,N-diméthylformamide, de l'eau ayant été utilisée pour coaguler la face externe de la fibre creuse. Ces fibres sont caractérisées, en ce qui concerne leur structure, par le fait qu'elles présentent sur leur face externe une peau ne comportant pas de pores de diamètre supérieur à 1000 Å et que la structure ouverte sous-jacente à la peau externe est constituée par une couche microporeuse présentant des pores dont la plus grande taille ne dépasse pas 1,5 µm et d'une couche macroporeuse présentant des macrovides de forme cylindrique orientés radialement et débouchant sur la face interne ; ces macrovides ont un diamètre d'environ 15 µm.

Les fibres qui équipent la cartouche CI (figure 15) sont obtenues selon le procédé décrit dans la publication "Fibres creuses en polysulfone. Préparation et propriétés de transfert en ultrafiltration" parue dans Compte Rendu de l'Académie des Sciences Paris, t. 293. série II pp. 681-686 (9 novembre 1981). Elles résultent de la filature d'une solution composée de 18 % de polysulfone ("Udel 3500"). 18 % de polyvinylpyrrolidone "K 15" (Fluka) et de 64 % de N,N-diméthylacétamide. L'eau est utilisée comme fluide de coagulation interne. Elles sont caractérisées en ce qu'elles présentent sur leur face interne une peau ne comportant pas de pores de diamètre supérieur à 1000 Å et une couche microporeuse comportant des macrovides ne débouchant pas sur la face externe.

Les caractéristiques des cartouches citées dans les exemples ci-après sont résumées dans le tableau 1.

Exemple 6

On ultrafiltre à l'aide de la cartouche CEL (fig.13) une solution aqueuse de NaCl à 5 g/l à 25° C. Le débit de circulation à l'entrée de la cartouche est de $4,6.10^{-5} m^3/s$. La pression à l'entrée est de 115 kPa et de 100 kPa à la sortie de la cartouche, soit une perte de charge de 15 kPa.

On mesure les conductivités électriques de la solution traitée et du perméat, et on constate qu'elles sont identiques, prouvant ainsi que les fibres laissent passer librement la solution saline.

On ultrafiltre alors à l'aide de la cartouche CEL (fig. 13) une solution à 10 g/l de "Dextran T70" de masse molaire moyenne $\overline{M}w$ = 40.100. On maintient la concentration de la solution traitée constante, en recyclant l'ultrafiltrat. En analysant en réfractométrie différentielle l'ultrafiltrat et la solution traitée, on constate que l'ultrafiltrat ne contient pas de "Dextran T70", prouvant ainsi que les fibres retiennent totalement cette macromolécule.

Le débit de circulation (extérieur aux fibres) à l'entrée de la cartouche est de $4,6.10^{-5} m^3/s$. La pression d'entrée est de 118 kPa, la pression de sortie de 100 kPa, soit une perte de charge de 18 kPa.

Le débit d'ultrafilrat est de $2,3.10^{-6} m^3/s$.

Comparaison avec la cartouche CI (fig.15) de même volume

Lorsqu'on utilise pour ultrafiltrer la même solution que précédemment, la cartouche CI contenant des fibres creuses à peau interne retenant totalement le "Dextran T70", avec un débit de circulation de $4,6.10^{-5} m^3/s$, la pression d'entrée est de 126 kPa, la pression de sortie de 100 kPa, soit une perte de charge de 26 kPa.

Le débit d'ultrafiltrat est de $0,51.10^{-6} m^3/s$.

La puissance nécessaire pour faire circuler le fluide dans la cartouche est égale au produit du débit de circulation par la perte de charge, soit :

- 0,83 watt pour la cartouche CEL
- 1,2 watt pour la cartouche CI.

L'énergie dépensée par unité de volume d'ultrafiltrat est égale à la puissance nécessaire 3 la circulation divisée par le débit d'ultrafiltrat, soit

- 0,10 kWh/m$^3$ (3,6.10 joules/m$^3$)pour la cartouche CEL
- 0,65 kWh/m$^3$ (23,5.10 joules/m$^3$) pour la cartouche CI.

On remarque un débit d'ultrafiltrat plus élevé et une plus faible consommation d'énergie par unité de volume d'ultrafiltrat pour la cartouche CEL, que pour la cartouche CI.

Exemple 7

Comme dans l'exemple 6, on vérifie que les fibres de la cartouche CER (fig. 2) que l'on utilise, laissent passer librement une solution aqueuse à 5 g/litre de NaCl.

On ultrafiltre à l'aide de la cartouche CER à 25° C, une solution à 10 g/litre de polyvinylpyrrolidone (PVP)K90 de masse molaire moyenne $\overline{M}w$ = 360.000. Comme dans l'exemple 1, on maintient la concentration de la solution traitée constante, et on vérifie que les fibres retiennent totalement la PVP K90. Le débit de circulation (extérieur aux fibres) à l'entrée de la cartouche est de $4{,}6.10^{-5}$ m$^3$/s. La pression d'entrée est de 123 kPa, la pression de sortie de 100 kPa, soit une perte de charge de 23 kPa.

Le débit d'ultrafiltrat est de $0{,}86.10^{-6}$ m$^3$/s.

Comparaison avec la cartouche CI de même volume

On utilise pour ultrafiltrer la même solution que précédemment, la cartouche CI contenant des fibres à peau interne qui retiennent totalement la polyvinylpyrrolidone "K90". Le débit de circulation (intérieur aux aux fibres) à l'entrée de la cartouche est de $4{,}6.10^{-5}$ m$^3$/s. La pression d'entrée est de 175 kPa, la pression de sortie est de 100 kPa, soit une perte de charge de 75 kPa.

Le débit d'ultrafiltrat est de $0{,}66.10^{-6}$ m$^3$/s.

Comme dans l'exemple 1, on calcule la puissance nécessaire à la circulation de la solution traitée dans la cartouche et l'énergie dépensée par unité de volume d'ultrafiltrat.

Puissance :

- 1,1 watt pour la cartouche CER
- 3,4 watts pour la cartouche CI

Energie :

- 0,36 kWh/m$^3$ ($1{,}28.10^6$ joules/m$^3$) pour la cartouche CER
- 1,43 kWh/m$^3$ ($5{,}15.10^6$ joules/m$^3$) pour la cartouche CI.

On remarque un débit d'ultrafiltrat plus élevé et une plus faible consommation d'énergie par unité de volume d'ultrafiltrat pour la cartouche CER , que pour la cartouche CI.

Exemple 8

On ultrafiltre une solution à 6 g/litre de protéines de lactosérum à l'aide de la cartoucne CER (fig. 2) à la température de 25° C.

L'analyse de l'ultrafiltrat montre que les protéines sont totalement retenues par les fibres.

On concentre cette solution de 6 g/litre à 30 g/litre en passant ainsi d'un volume initial de 1 litre à un volume final de 0,2 litre. Le débit de circulation (extérieur aux fibres) à l'entrée de la cartouche est de $3.10^{-5}$ m$^3$/s. La pression à l'entrée est de 108 kPa, et la pression à la sortie de 100 kPa, soit une perte de charge de 8 kPa.

Le débit d'ultrafiltrat varie de $1{,}06.10^{-6}$ m$^3$/s au départ à $0{,}33.10^{-6}$ m$^3$/s à la fin de la concentration. Ce qui donne un débit moyen d'ultrafiltrat de $0{,}53.10^{-6}$ m$^3$/s. On calcule comme dans l'exemple 1 la puissance nécessaire à la circulation et l'énergie consommée par unité de volume d'ultrafiltrat.

Puissance :

0,24 watt

Energie :

0,13 kWh/m$^3$ ($0{,}45.10^6$ joules/m$^3$).

Après avoir lavé la cartouche suivant le protocole du tableau 2, on retrouve la perméabilité hydraulique initiale de la cartouche.

Exemple 9

On ultrafiltre un lait écrémé (UHT "Candia") à l'aide de la cartouche CER 1 à la température de 50° C.

L'analyse de l'ultrafiltrat montre que les protéines sont totalement retenues par la fibre.

On concentre ce lait d'un facteur 3 en passant d'un volume initial de 0,9 litre à un volume final de 0,3 litre. Le débit de circulation (externe aux fibres) à l'entrée de la cartouche est de $2.10^{-5}$ $m^3/s$. La pression à l'entrée est de 110 kPa, et de 100 kPa à la sortie, soit une perte de charge de 10 kPa.

Le débit d'ultrafiltrat varie de $1,5.10^{-6} m^3/s$ en début de concentration à $0,12.10^{-6}$ $m^3/s$ à la fin de la concentration, soit un débit d'ultrafiltrat moyen de $0,31.10^{-6} m^3/s$.

La puissance nécessaire à la circulation et l'énergie consommée par unité de volume d'ultrafiltrat sont calculés comme dans l'exemple 6.

Puissance : 0,2 watt

Energie : 0,18 $kWh/m^3$ ($0,64.10^6$ $joules/m^3$).

Après avoir lavé la cartouche suivant le protocole du tableau 2, on retrouve la perméabilité hydraulique initiale de la cartouche.

Tableau 1 - Caractéristiques des cartouches citées dans les exemples

| Type de cartouche | Volume total cartouche ($m^3$) | Diamètre extérieur cartouche (m) | Long. totale cartouche (m) | Taux de (1) remplissage | Longueur utile (2) fibres (m) | Diamètre extérieur fibre (m) | Diamètre intérieur fibre (m) | Nombre de fibres | Surface de membrane ($m^2$) (3) | Perméabilité à l'eau des fibres à 25°C ($m^3/m^2.s.Pa$) |
|---|---|---|---|---|---|---|---|---|---|---|
| CEL | $10^{-4}$ | $2,5.10^{-2}$ | 0,2 | 0,5 | 0,155 | $0,4.10^{-3}$ | $0,2.10^{-3}$ | 1378 | 0,268 | $2.10^{-10}$ |
| CER | $10^{-4}$ | $2,5.10^{-2}$ | 0,2 | 0,6 | 0,155 | $0,36.10^{-3}$ | $0,22.10^{-3}$ | 1338 | 0,235 | $3,3.10^{-10}$ |
| CER | $10^{-4}$ | $2,5.10^{-2}$ | 0,2 | 0,55 | 0,155 | $0,4.10^{-3}$ | $0,17.10^{-3}$ | 866 | 0,169 | $1,9.10^{-10}$ |
| CI | $10^{-4}$ | $2,5.10^{-2}$ | 0,2 | 0,55 | 0,155 | $1,22.10^{-3}$ | $0,57.10^{-3}$ | 163 | 0,045 | $0,35.10^{-10}$ |

(1) = Le taux de remplissage est la fraction du volume interne de la cartouche occupé par les fibres.

(2) = La longueur utile est égale à la longueur totale diminuée des longueurs encollées aux extrémités du faisceau de fibres.

(3) = La surface de membrane est calculée à partir du diamètre extérieur des fibres pour les cartouches CER et CEL et à partir du diamètre intérieur pour la cartouche CI.

Tableau 2 - Protocole de lavage après ultrafiltration de produits laitiers

| N° de l'étape | Nature de la solution de lavage | Température | Durée du lavage |
|---|---|---|---|
| 1 | Eau | A (1) | 15 min |
| 2 | Acide nitrique 0,5 % | 50° C | 15 min |
| 3 | Eau | A (1) | 15 min |
| 4 | Soude 0,5 % + EDTA N 0,5 % | 50° C | 15 min |
| 5 | Eau | A (1) | 15 min |

(A) = température ambiante.

## Revendications

1. Procédé de préparation de fibres creuses à base de substances polymères fibrogènes de structure asymétrique en ce sens qu'elles présentent une couche relativement dense dite "peau" (H) de très faible épaisseur inferieure à <0,1 µm à leur périphérie externe ladite peau externe étant perméable à l'eau avec une absence substantielle de pores de diamètre superieur à 0,1 µm, laquelle est liée à une structure dite "ouverte" (J) dont la porosité augmente lorsqu'on se dirige vers la face interne, ladite structure ouverte sous-jacente à ladite peau se composant d'une couche microporeuse directement au contact de ladite peau, fibres creuses comportant des micropores de dimensions supérieures à 0,1 µm et inférieures à 2 µm, et d'une couche macroporeuse présentant des macrovides (I) essentiellement cylindriques orientés radialement et régulièrement espacés avec des parois de porosité homogène dans le sens radial s'ouvrant du côté de la face interne de la fibre et ne s'ouvrant pas du côté de la face externe, ces macrovides ayant une dimension principale supérieure à 2 µm, la proportion de ces macrovides représentant au moins 20 % en volume de la paroi et les micropores étant présents également dans la zone contenant les macrovides, selon lequel l'on dissout un polymère fibrogène dans un solvant à une concentration qui convienne pour le filer, on ajoute au moins un additif choisi parmi soit les macromolécules de masse molaire supérieure à 500, soit parmi les agents tensio-actifs ionigues ou non, permettant l'obtention d'une solution homogène avec le couple solvantpolymère, on fait passer la solution homogène contenant le polymère, le solvant et l'additif à travers une filière, on injecte simultanément au travers du trou de l'extrudat, un fluide contenant une quantité suffisante d'au moins un solvant du polymère fibrogène pour éviter que ledit fluide ne coagule la solution contenant le polymère fibrogène, et on fait passer le filament constitué par ladite solution homogène , donc non coagulée, entourant ledit fluide dans un bain de coagulation contenant au moins un non-solvant du polymère fibrogène choisi pour précipiter rapidement la surface externe du filament.

2. Procédé selon la revendication 1, caractérisé en ce que le polymère fibrogène est choisi parmi les polyfluorures de vinylidène, les polysulfones, les polyacrylonitriles, la cellulose et les esters cellulosiques, les poly(chlorure de vinyle), les poly(acétates de vinyle), les polyamides les polyimides, les polycarbonates, les poly(oxydes de phénylène), les polystyrènes et plus généralement les polyéthers, les polyesters, les poly(oxydes d'arylène), les polysulfures, les polymères polyvinyliques, les polymères polyallyliques, les polyazoles et les polyimidazoles, les polyphosphazines, les polyhydrazides ; ou bien ce polymère fibrogène peut être choisi parmi les copolymères ou les mélanges de polymères

constitués à partir d'au moins un des polymères ci-dessus.

3. Procédé selon la revendication 1 ou 2, caractérisé en ce que le polymère fibrogène est une polysulfone ou un polyfluorure de vinylidène.

4. Procédé selon l'une des revendications 1 à 3, caractérisé en ce que la macromolècule de masse molaire supérieure à 500 appartient aux familles suivantes : polyvinylpyrrolidones, polyvinylpyridines, polyéthylèneglycols, polyacrylamides, acides polyacryliques, alcools polyvinyliques.

5. Procédé selon l'une des revendications 1 à 4, caractérisé en ce que l'agent tensio-actif est choisi parmi ceux dont le motif hydrophobe comporte un enchaînement polyoxyéthylène.

6. Procédé selon l'une quelconque des revendications 1 à 5, caractérisé en ce que le fluide injecté au travers du trou de l'extrudat est constitué par le solvant utilisé pour dissoudre le polymère fibrogène.

7. Procédé selon l'une quelconque des revendications 1 à 6, caractérisé en ce que l'additif ajouté à la solution de polymère fibrogène est soluble dans le bain de coagulation.

8. Application des fibres creuses directement obtenues par la mise en oeuvre du procédé selon l'une quelconque des revendications 1 à 7 dans le domaine des procédés de séparations à membranes.

9. Application selon la revendication 8 dans le domaine de l'ultrafiltration ou de la microfiltration utilisant des cartouches réalisées à partir desdites fibres creuses, la circulation du liquide à traiter s'effectuant sous pression à l'extérieur de ces fibres, le filtrat ayant traversé la paroi de ces dernières circulant à l'intérieur du canal central de ces fibres.

10. Application selon la revendication 9, caractérisée en ce que les fibres creuses constitutives de ces cartouches ont un diamètre extérieur au moins égal à 0,1 mm.

11. Application selon la revendication 10 dans laquelle la cartouche a une capacité d'au moins 1000 $m^2/m^3$.

12. Application selon la revendication 11, caractérisée en ce que la différence de pression qui est maintenue de part et d'autre de la paroi des fibres creuses est inférieure à $10^6$ Pa et supérieure à $10^4$ Pa.

## Claims

1. A process for the preparation of hollow fibres based on polymeric fibrogenic substances of asymmetrical structure in that they have a relatively dense layer ("skin") (H) of very small thickness (smaller than 0.1 µm) at their outer periphery, said outer skin being water-permeable and substantially free from pores of diameter larger than 0.1 µm, said outer periphery being bonded to an "open" structure (J) whose porosity increases in the direction of the inner face, said open structure underlying said skin being composed of a microporous layer directly contacting said skin, hollow fibres comprising micropores of dimensions larger than 0.1 µm and smaller than 2 µm, and a macroporous layer having substantially cylindrical, radially oriented and regularly spaced macrovoids (I) with walls of homogeneous porosity in the radial direction opening on the side of the inner face of the fibre and not opening on the side of the outer face, said macrovoids having a main dimension larger than 2 µm, the proportion of said macrovoids representing at least 20% by volume of the wall and the micropores also being present in the zone containing the macrovoids, wherein a fibrogenic polymer is dissolved in a solvent at a concentration which is suitable for spinning; at least one additive is added which is selected from either the macromolecules of a molar mass higher than 500, or from ionic or non-ionic surfactants, enabling a homogeneous solution to be obtained with the solvent and polymer; the homogeneous solution containing the polymer, the solvent and the additive is passed through a spinning nozzle; a fluid is simultaneously injected through the extrudate hole, said fluid containing a sufficient quantity of at least one solvent for the fibrogenic polymer to prevent said fluid from coagulating the solution containing the fibrogenic polymer; and the filament formed by said homogeneous - i.e., uncoagulated - solution surrounding said fluid is introduced into a coagulation bath containing at least one non-solvent for the fibrogenic polymer selected so as to precipitate quickly the outer surface of the filament.

2. A process according to claim 1, characterized in that the fibrogenic polymer is selected from vinylidene polyfluorides, polysulphones, polyacrylonitriles, cellulose and cellulosic esters, poly(vinylchlorides), poly(vinylacetates), polyamides, polyimides, polycarbonates, poly(phenyleneoxides), polystyrenes and more generally the polyethers, polyesters, poly(aryleneoxides), polysulphides, polyvinylic polymers, polyallylic polymers, polyazoles and polyimidazoles, polyphosphazines, polyhydrazides; or said fibrogenic polymer can be selected from copolymers or mixtures of copolymers formed from at least one of the aforementioned polymers.

3. A process according to claims 1 or 2, characterized in that the fibrogenic polymer is a polysulphone or a vinylidene polyfluoride.

4. A process according to any of claims 1 to 3, characterized in that the macromolecule of molar mass higher than 500 belongs to the following families: polyvinyl pyrrolidones, polyvinyl pyridines, polyethylene glycols, polyacrylamides, polyacrylic acids, polyvinylic alcohols.

5. A process according to any of claims 1 to 4, characterized in that the surfactant is selected from those whose repeating hydrophobic unit comprises a polyoxyethylene chain formation.

6. A process according to any of claims 1 to 5, characterized in that the fluid injected through the extrudate hole is formed by the solvent used to dissolve the fibrogenic polymer.

7. A process according to any of claims 1 to 6, characterized in that the additive added to the solution of fibrogenic polymer is soluble in the coagulation bath.

8. Application of the hollow fibres directly obtained by the performance of the process according to any of claims 1 to 7 in the field of membrane separation processes.

9. Application according to claim 8 in the field of ultrafiltration or microfiltration using cartridges produced from said hollow fibres, the liquid to be treated being circulated under pressure outside said fibres, the filtrate having passed through the wall of said fibres, circulating inside the central channel of the fibres.

10. Application according to claim 9, characterized in that the hollow fibres forming said cartridges have an external diameter at least equal to 0.1 mm.

11. Application according to claim 10 wherein the cartridge has a capacity of at least 1000 $m^2/m^3$.

12. Application according to claim 11, characterized in that the pressure differential which is maintained on both sides of the wall of hollow fibres is lower than $10^6$ Pa and higher than $10^4$ Pa.

**Patentansprüche**

1. Verfahren zur Herstellung von Hohlfasern auf der Basis von polymeren faserbildenden Substanzen, welche Fasern insoferne eine asymmetrische Struktur haben, als sie an ihrer Außenseite eine relativ dichte, "Haut" genannte, Schicht (H) mit einer sehr geringen Dicke von unter 0,1 $\mu$ aufweisen, welche an einer "offen" genannten Struktur (J) liegt, deren Porosität gegen die Innenfläche hin zunimmt, welche unterhalb der genannten Haut liegende offene Struktur sich aus einer mit der genannten Haut direkt in Kontakt befindlichen mikroporösen Schicht, Mikroporen mit Abmessungen von über 0,1 $\mu$m und unter 2 $\mu$m enthaltenden Hohlfasern und einer makroporösen Schicht zusammensetzt, welch letztere Schicht im wesentlichen zylindrische Makro-Hohlräume (I) aufweist, die radial ausgerichtet und in regelmäßigem Abstand zwischen Wänden von in radialer Richtung homogener Porosität angeordnet sind, und die sich zur Seite der Innenfläche der Faser hin öffnen und zur Seite der Außenfläche hin nicht öffnen, wobei die Makro-Hohlräume eine Hauptabmessung von über 2 $\mu$m aufweisen und Anteil in bezug auf die Wand mindestens 20 Vol.-% beträgt, und wobei die Mikroporen auch in der die Makro-Hohlräume aufweisenden Zone vorhanden sind, bei welchem Verfahren man ein faserbildendes Polymer in einem Lösungsmittel in einer solchen Konzentration auflöst, die geeignet ist, Fäden zu spinnen, man mindestens ein Zusatzmittel beigibt, das unter den Makromolekülen mit einer Molekularmasse von über 500 oder den ionischen oder nicht-ionischen oberflächenaktiven Wirkstoffen ausgewählt wird, das es erlaubt, eine homogene Lösung mit dem Lösungsmittel-Polymer-Paar zu erhalten,

man die homogene, das Polymer, das Lösungsmittel und das Zusatzmittel enthaltende Lösung durch eine Spinndüse leitet, man gleichzeitig durch das Extrudierloch ein Fluid einspritzt, das eine ausreichende Menge mindestens eines Lösungsmittels des faserbildenden Polymers enthält, um zu vermeiden, daß das Fluid die das faserbildende Polymer enthaltende Lösung zum Gerinnen bringt, und man das Filament, welches durch die homogene und somit nicht koagulierte Lösung, die das genannte Fluid umgibt, gebilet ist, in ein Koagulierbad leitet, das mindestens ein Nicht-Lösungsmittel des faserbildenden Polymers enthält, um die Außenfläche des Filamentes schnell zu härten.

**2.** Verfahren nach Anspruch 1, dadurch gekennzeichnet, daß das faserbildende Polymer aus den Fluorpolymeren des Vinylidens, den Polysulfonen, den Polyacrylnitrilen, der Zellulose und den Zelluloseestern, den Polyvinylchloriden, den Polyvinylazetaten, den Polyamiden, den Polyimiden, den Polykarbonaten, den Polyphenylenoxyden, den Polystyrolen und, allgemeiner, den Polyäthern, Polyestern, Polyaryloxyden, Polysulfiden, Polyvinylpolymeren, Polyallylpolymeren, Polyazolen und Polyimidazolen, Polyphosphazinen und Polyhydraziden ausgewählt wird; das faserbildende Polymer kann auch unter den Copolymeren oder Polymermischungen ausgewählt werden, die mindestens eines der vorgenannten Polymere enthalten.

**3.** Verfahren nach Anspruch 1 oder 2, dadurch gekennzeichnet, daß das faserbildende Polymer ein Polysulfon oder ein Fluorpolymer des Vinylidens ist.

**4.** Verfahren nach einem der Ansprüche 1 bis 3, dadurch gekennzeichnet, daß das Makromolekül mit einer Molekularmasse über 500 einer der folgenden Familien angehört: Polyvinylpyrrolidone, Polyvinylpyridine, Polyäthylenglykole, Polyacrylamide, Polyacrylsäuren, Polyvinylalkohole.

**5.** Verfahren nach einem der Ansprüche 1 bis 4, dadurch gekennzeichnet, daß das oberflächenaktive Mittel unter jenen ausgewählt wird, deren hydrophobes Motiv eine Polyoxyäthylenverkettung aufweist.

**6.** Verfahren nach einem der Ansprüche 1 bis 5, dadurch gekennzeichnet, daß das durch die Spritzdüse eingespritzte Fluid aus dem Lösungsmittel besteht, das für das Auflösen des faserbildenden Polymers verwendet wird.

**7.** Verfahren nach einem der Ansprüche 1 bis 6, dadurch gekennzeichnet, daß das der Lösung des faserbildenden Polymers beigegebene Zusatzmittel im Koagulierbad löslich ist.

**8.** Verwendung von durch das Verfahren nach einem der Ansprüche 1 bis 7 hergestellten Hohlfasern auf dem Gebiet der Membrantrennverfahren.

**9.** Verwendung nach Anspruch 8 auf dem Gebiet der Ultrafiltration oder der Mikrofiltration unter Verwendung von ausgehend von den genannten Hohlfasern hergestellten Kartuschen, wobei die zu behandelnde Flüssigkeit unter Druck außerhalb dieser Fasern zirkulieren gelassen wird und wobei das Filtrat nach Duchqueren der Wand der Fasern im Inneren das mittigen Kanals dieser Fasern zirkuliert.

**10.** Verwendung nach Anspruch 9, dadurch gekennzeichnet, daß die die Kartuschen bildenden Hohlfasern einen Außendurchmesser von mindestens gleich 0,1 mm haben.

**11.** Verwendung nach Anspruch 10, bei der die Kartusche eine Kapazität von mindestens 1000 $m^2/m^3$ hat.

**12.** Verwendung nach Anspruch 11, dadurch gekennzeichnet, daß der zwischen den Seiten der Hohlfaserwand aufrecht erhaltene Druckunterschied kleiner als $10^6$ Pa und größer als $10^4$ Pa ist.

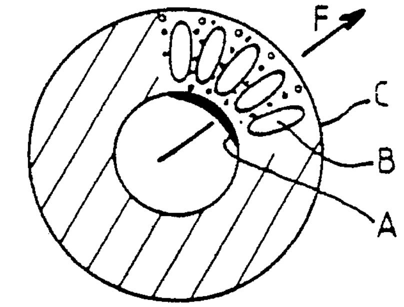


FIG.1

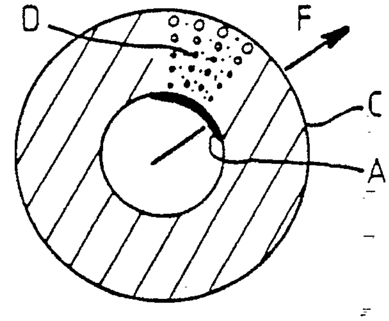


FIG.2

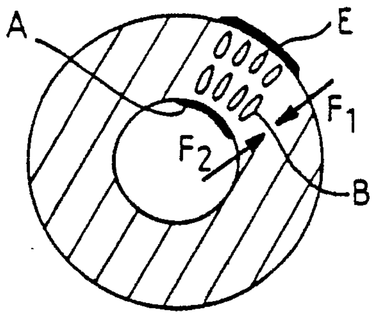


FIG.3

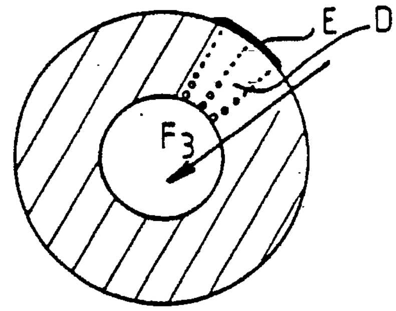


FIG.4

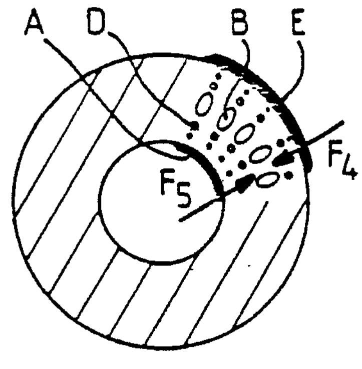


FIG.5

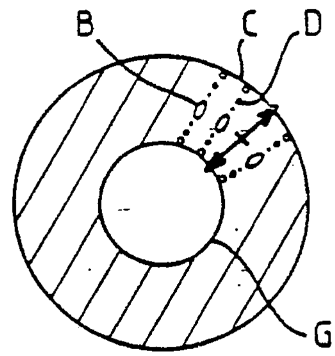


FIG.6

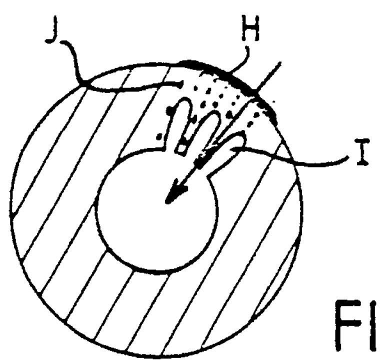


FIG.7

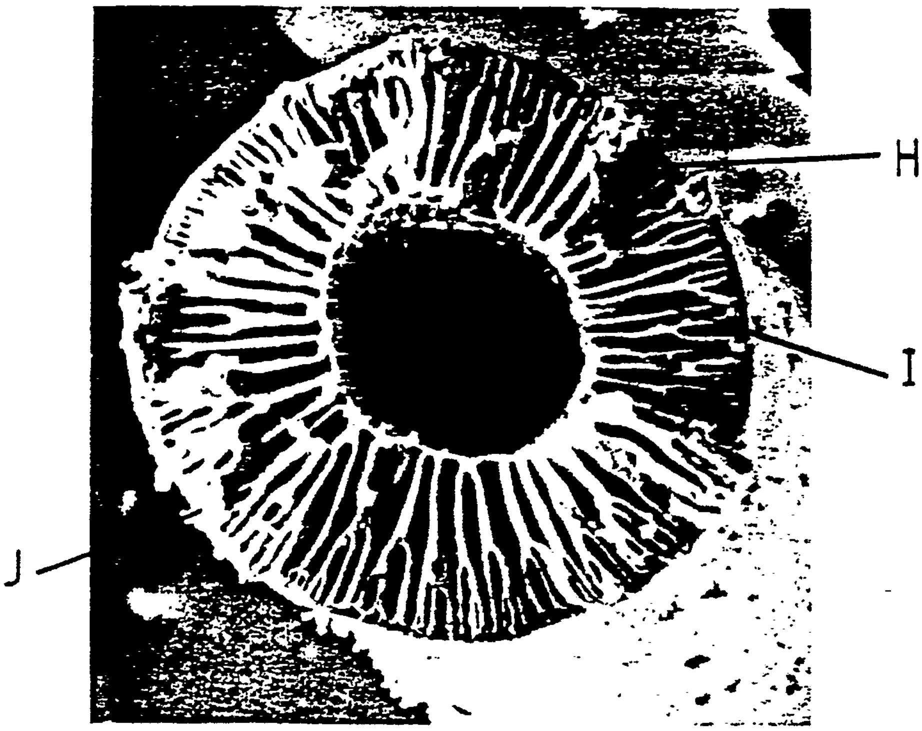


FIG.8

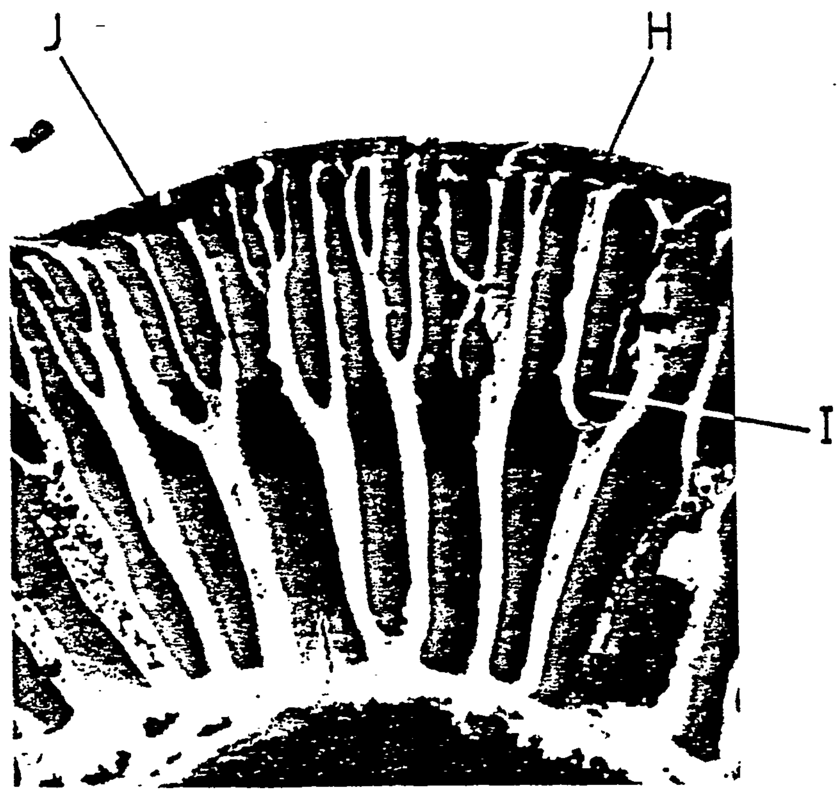


FIG.9

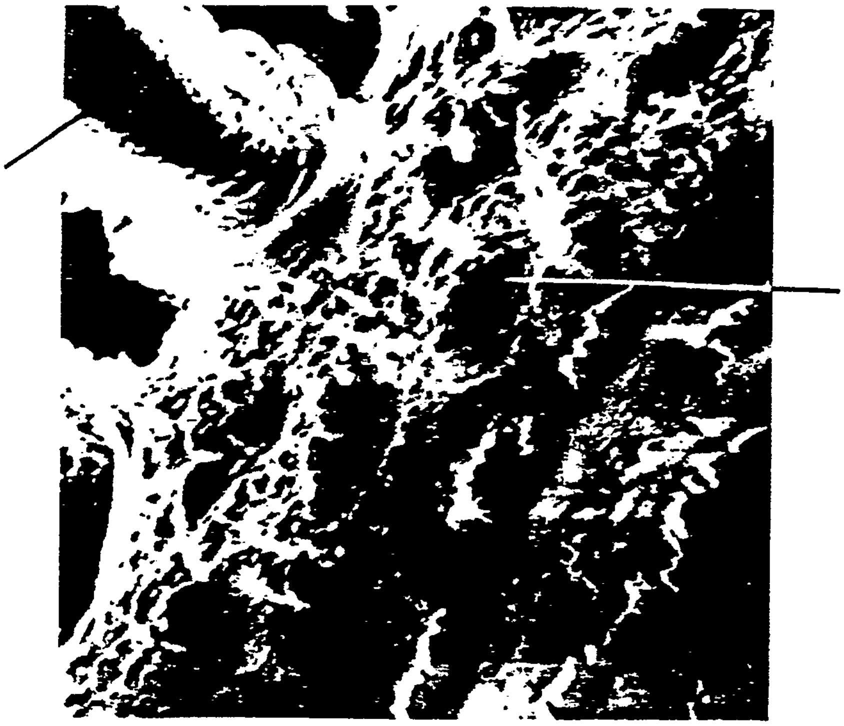


FIG.10

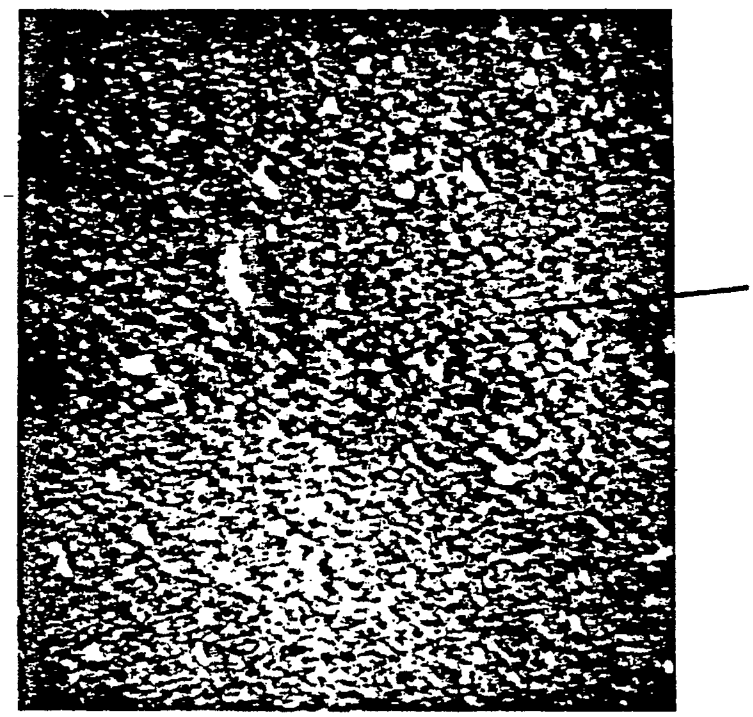


FIG.11

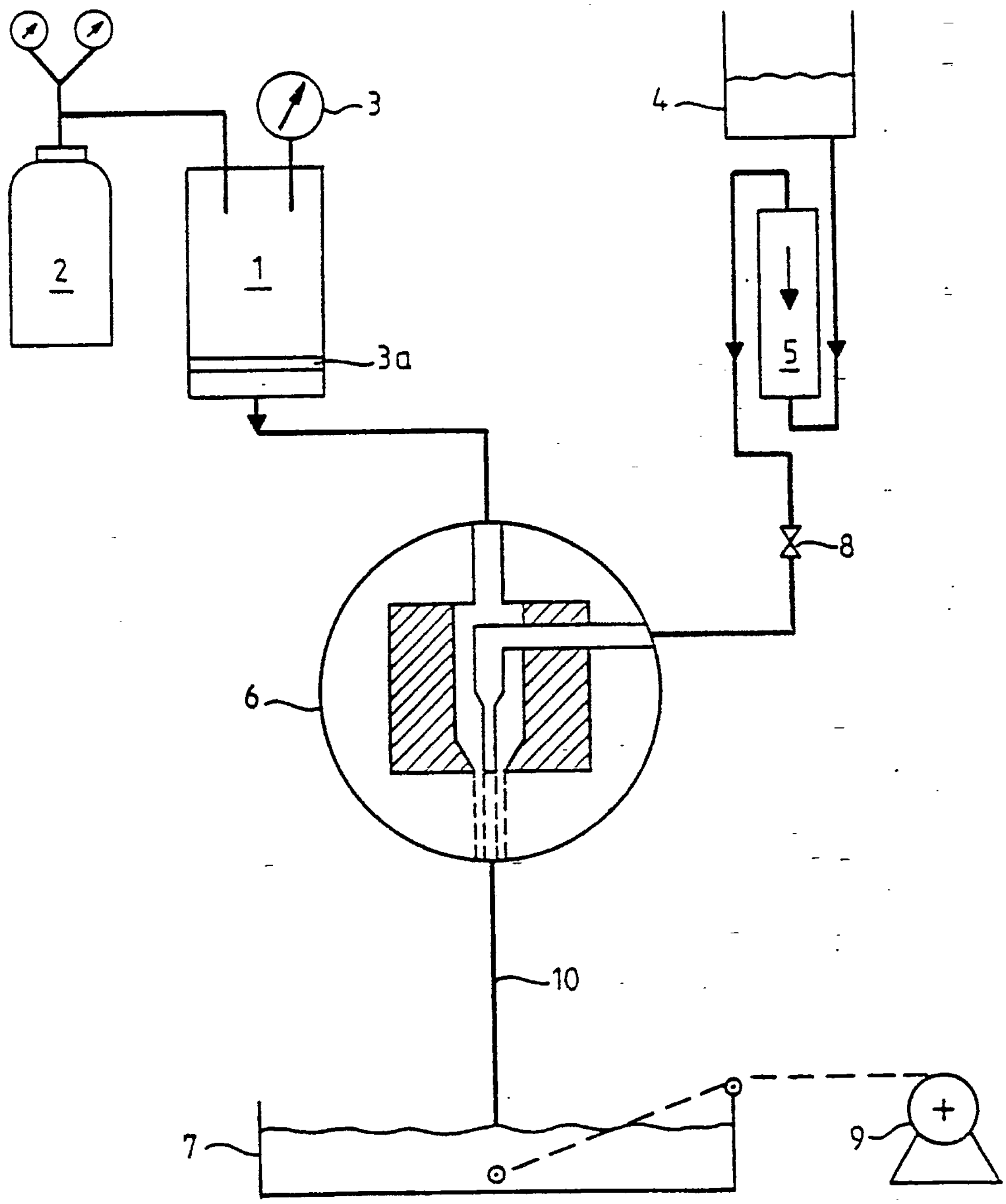


FIG.12

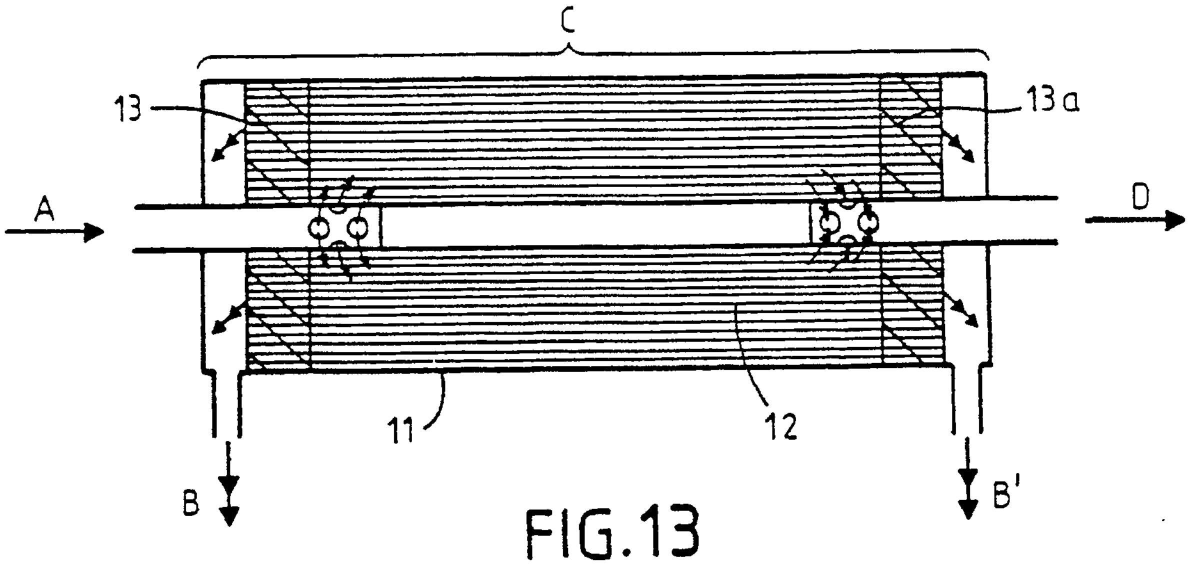


FIG.13

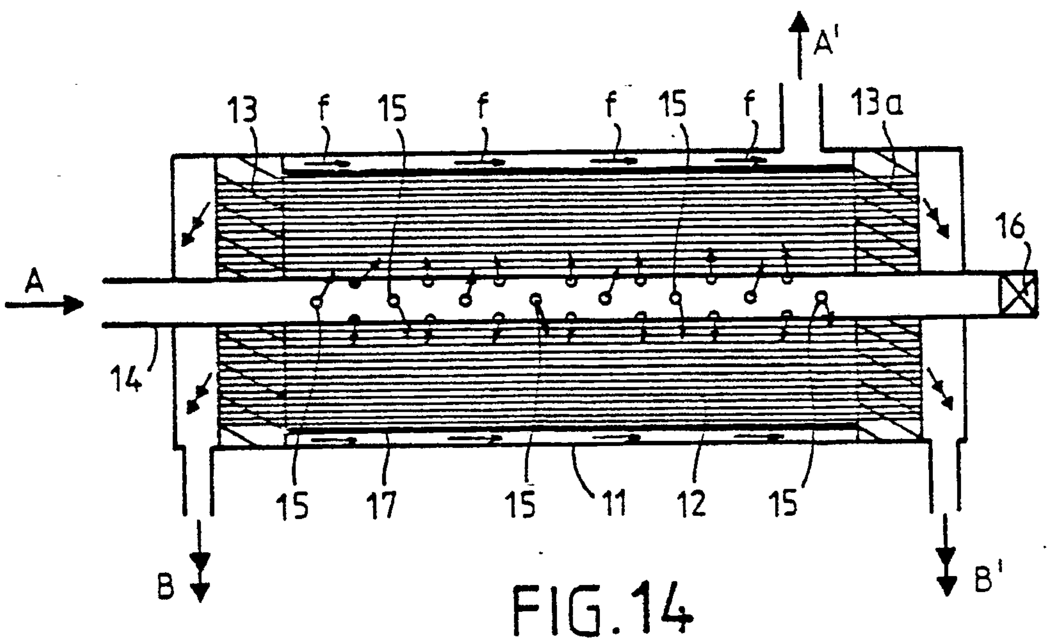


FIG.14

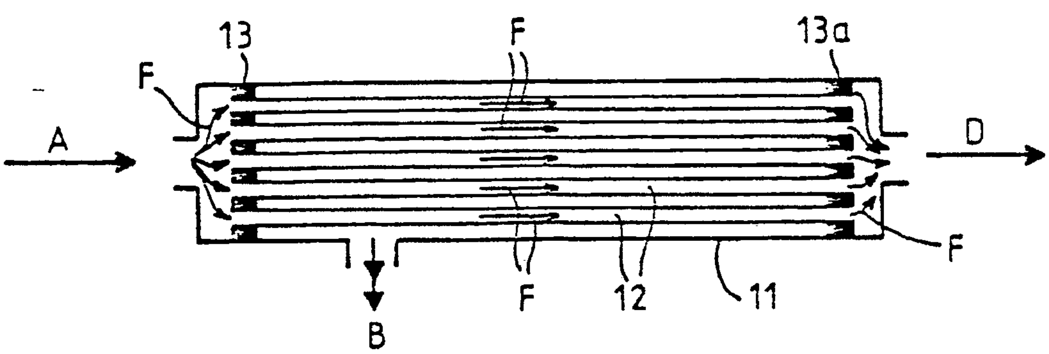


FIG.15